(19) Europäisches Patentamt
European Patent Office
Office européen des brevets

(11) **EP 4 586 333 A1**

(12) **EUROPEAN PATENT APPLICATION**

(43) Date of publication:
**16.07.2025 Bulletin 2025/29**

(21) Application number: **24223569.5**

(22) Date of filing: **27.12.2024**

(51) International Patent Classification (IPC):
**H01M 4/131** *(2010.01)* **H01M 4/505** *(2010.01)*
**H01M 4/525** *(2010.01)* **H01M 4/62** *(2006.01)*
**H01M 10/0525** *(2010.01)*

(52) Cooperative Patent Classification (CPC):
**H01M 4/131; H01M 4/505; H01M 4/525;
H01M 4/625; H01M 10/0525;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.12.2023 KR 20230192675**

(71) Applicant: **SK On Co., Ltd.
Seoul 03161 (KR)**

(72) Inventors:
• **CHOI, Young Ju
Daejeon 34124 (KR)**
• **KIM, Sung Do
Daejeon 34124 (KR)**
• **KIM, Jeong A
Daejeon 34124 (KR)**
• **KIM, Ho Seong
Daejeon 34124 (KR)**
• **PARK, Sun Min
Daejeon 34124 (KR)**
• **LEE, Yong Seok
Daejeon 34124 (KR)**

(74) Representative: **Stolmár & Partner
Patentanwälte PartG mbB
Blumenstraße 17
80331 München (DE)**

(54) **CATHODE FOR LITHIUM SECONDARY BATTERY AND LITHIUM SECONDARY BATTERY INCLUDING THE SAME**

(57)    A cathode for a lithium secondary battery according to embodiments of the present disclosure includes a cathode current collector, a first cathode active material layer which is disposed on at least one surface of the cathode current collector, and includes a first cathode active material having a single particle form and a point-like conductive material, and a second cathode active material layer which is disposed on the first cathode active material layer, and includes a second cathode active material having a single particle form and a linear conductive material, wherein the second cathode active material has an average particle diameter (D50) of 3 $\mu$m to 4 $\mu$m.

EP 4 586 333 A1

**Description**

[BACKGROUND OF THE INVENTION]

1. Field of the Invention

The present disclosure relates to a cathode for a lithium secondary battery and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

Recently, as subjects, to which the lithium secondary battery is applied, are expanded, development for a lithium secondary battery having a higher capacity and output has been proceeded. For example, capacity characteristics and lifespan characteristics of the lithium secondary battery may be decreased depending on a cathode structure of the lithium secondary battery and a cathode active material and a conductive material included in the cathode.

[SUMMARY OF THE INVENTION]

According to an aspect of the present disclosure, it is an object to provide a cathode for a lithium secondary battery having improved lifespan characteristics.

According to another aspect of the present disclosure, it is an object to provide a lithium secondary battery including the cathode having improved lifespan characteristics.

To achieve the above objects, according to an aspect of the present disclosure, there is provided a cathode for a lithium secondary battery including: a cathode current collector; a first cathode active material layer which is disposed on at least one surface of the cathode current collector, and includes a first cathode active material having a single particle form and a point-like conductive material; and a second cathode active material layer which is disposed on the first cathode active material layer, and includes a second cathode active material having a single particle form and a linear conductive material, wherein the second cathode active material has an average particle diameter (D50) of 3 $\mu$m to 4 $\mu$m.

In some embodiments, the point-like conductive material may include at least one selected from the group consisting of graphite, carbon black, graphene, tin, tin oxide, titanium oxide, $LaSrCoO_3$ and $LaSrMnO_3$.

In some embodiments, the linear conductive material may include carbon nanotubes.

In some embodiments, the linear conductive material may have a length of 10 $\mu$m to 55 $\mu$m.

In some embodiments, a first Raman peak intensity ratio defined be Equation 1 below may be smaller than a second Raman peak intensity ratio defined be Equation 2 below:

$$[\text{Equation 1}]$$

$$\text{First Raman peak intensity ratio} = ID1/IG1$$

$$[\text{Equation 2}]$$

$$\text{Second Raman peak intensity ratio} = ID2/IG2.$$

In Equations 1 and 2, ID1 is a maximum peak intensity in a wavenumber range of 1300 cm$^{-1}$ to 1400 cm$^{-1}$ in a Raman spectrum of the first cathode active material layer, IG1 is a maximum peak intensity in a wavenumber range of 1550 cm$^{-1}$ to 1650 cm$^{-1}$ in a Raman spectrum of the first cathode active material layer, ID2 is a maximum peak intensity in a wavenumber range of 1300 cm$^{-1}$ to 1400 cm$^{-1}$ in a Raman spectrum of the second cathode active material layer, and IG2 is a maximum peak intensity in a wavenumber range of 1550 cm$^{-1}$ to 1650 cm$^{-1}$ in a Raman spectrum of the second cathode active material layer.

In some embodiments, the first Raman peak intensity ratio may be 0.5 to 1.09.

In some embodiments, the second Raman peak intensity ratio may be 1.10 to 1.25.

In some embodiments, the first cathode active material may have an average particle diameter (D50) of 3 $\mu$m to 4 $\mu$m.

In some embodiments, a content of the point-like conductive material may be 1% by weight to 5% by weight based on a total weight of the first cathode active material layer.

In some embodiments, a content of the linear conductive material may be 1% by weight to 5% by weight based on a total weight of the second cathode active material layer.

According to another aspect of the present disclosure, there is provided a lithium secondary battery including: the above-described cathode for a lithium secondary battery; and an anode disposed to face the cathode.

According to an embodiment of the present disclosure, an occurrence of cracks in the cathode active material may be suppressed, and lifespan characteristics and stability during rapid charging and discharging of the lithium secondary battery may be improved.

According to an embodiment of the present disclosure, while the strength and stability of the cathode may be improved by a high amorphousness of the second cathode active material layer, the lifespan characteristics during rapid charging and discharging may be improved through the crystallinity of the first cathode active material layer.

The cathode for a lithium secondary battery of the present disclosure and the lithium secondary battery including the same may be widely applied to green technology fields such as an electric vehicle, and a battery charging station, as well as other solar power generation and wind power generation using the batteries. The cathode for a lithium secondary battery of the present disclosure and the lithium secondary battery including the same may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic cross-sectional view illustrating a cathode for a lithium secondary battery according to exemplary embodiments; and

FIGS. 2 and 3 are a schematic plan view and a cross-sectional view illustrating a lithium secondary battery according to exemplary embodiments, respectively.

[DETAILED DESCRIPTION OF THE INVENTION]

Embodiments of the present disclosure provide a cathode for a lithium secondary battery (hereinafter, abbreviated as a "cathode"). In addition, a lithium secondary battery (hereinafter, abbreviated as a "secondary battery") including the cathode is provided.

Hereinafter, embodiments of the present disclosure will be described in detail. However, these embodiments are merely an example, and the present disclosure is not limited to the specific embodiments described as the example.

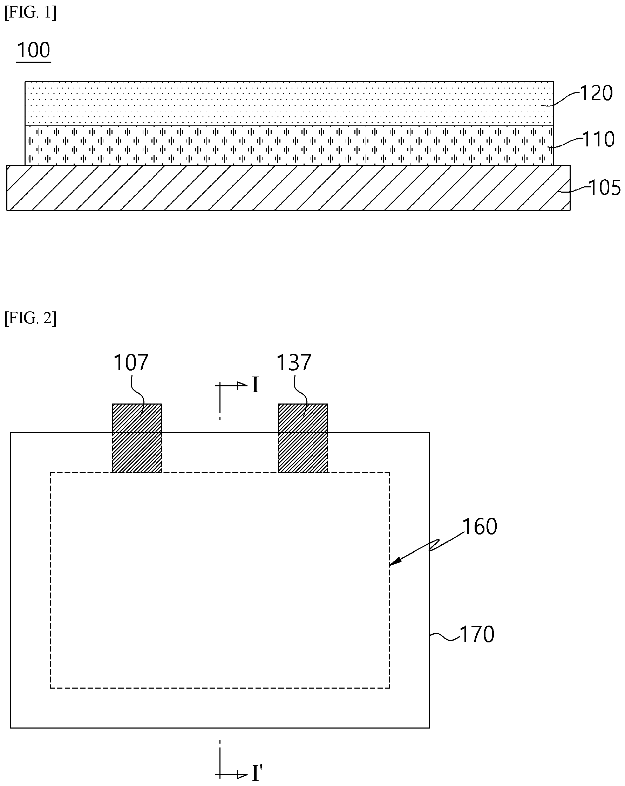

FIG. 1 is a schematic cross-sectional view illustrating a cathode for a lithium secondary battery according to exemplary embodiments.

Referring to FIG. 1, a cathode 100 may include a cathode current collector 105, a first cathode active material layer 110 and a second cathode active material layer 120.

The cathode current collector 105 may include stainless steel, nickel, aluminum, titanium or an alloy thereof. The cathode current collector 105 may also include aluminum or stainless steel subj ected to surface treatment with carbon, nickel, titanium or silver. For example, the cathode current collector 105 may have a thickness of 10 $\mu$m to 50 $\mu$m.

The first cathode active material layer 110 including a first cathode active material having a single particle form and a point-like conductive material may be disposed on at least one surface of the cathode current collector 105. Accordingly, the structural stability and electrical conductivity of the first cathode active material layer 110 may be improved.

In some embodiments, the first cathode active material may have an average particle diameter (D50) of 3 $\mu$m to 4 $\mu$m. Within the above range, a contact area between the first cathode active material and the point-like conductive material may be increased, thereby enhancing an impact resistance of the first cathode active material to suppress a side reaction therebetween, while also improving the conductivity of the cathode 100. Accordingly, the rapid charging performance and lifespan characteristics of the battery may be improved.

As used herein, the term "average particle diameter," "D50" and/or "average particle diameter (D50)" may refer to a particle diameter when a volume accumulation percentage in the particle size distribution obtained from the particle volume corresponds to 50%.

The particle size distribution of the first cathode active material or the second cathode active material may be measured by a particle size analyzer (PSA) (e.g., Mastersizer from Malvern). The particle diameter when a volume accumulation percentage in the particle size distribution corresponds to 50% may be evaluated as the average particle diameter (D50).

The term "point-like conductive material" as used herein may refer to a conductive material having an aspect ratio of 0.5 to 1.5. For example, the point-like conductive material may include a substantially spherical shape or an elliptical shape. The aspect ratio may refer to a length to a diameter of the point-like conductive material.

In some embodiments, the point-like conductive material may include at least one selected from the group consisting of graphite, carbon black, graphene, tin, tin oxide, titanium oxide, $LaSrCoO_3$ and $LaSrMnO_3$.

In some embodiments, a content of the point-like conductive material based on a total weight of the first cathode active material layer 110 may be 1% by weight ("wt%") to 5 wt%, or 1.5 wt% to 4 wt%. Within the above range, energy density and lifespan characteristics of the cathode 100 may be improved.

According to an embodiment, the first cathode active material layer 110 may be disposed to be in direct contact with the cathode current collector 105.

For example, by including the point-like conductive material in the first cathode active material layer 110 adjacent to the cathode current collector 105, the stability of the cathode 100 may be improved.

A content of the first cathode active material based on a total weight of the first cathode active material layer 110 may be 40 wt% or more, 50 wt% or more, 60 wt% or more, 70 wt% or more, 80 wt% or more, or 90 wt% or more.

The content of the first cathode active material based on the total weight of the first cathode active material layer 110 may be 99 wt% or less, 95 w% or less, 90 wt% or less, or 85 wt% or less.

In one embodiment, the cathode active material included in the first cathode active material layer 110 may be substantially composed of the first cathode active material.

In exemplary embodiments, the second cathode active material layer 120 including a second cathode active material having a single particle form and a linear conductive material may be disposed on the first cathode active material layer 110. Accordingly, the lifespan characteristics and output characteristics of the cathode 100 may be improved.

In exemplary embodiments, the second cathode active material may have an average particle diameter (D50) of 3 $\mu$m to 4 $\mu$m. Within the above range, a contact area between the second cathode active material and the linear conductive material may be increased, thereby enhancing the impact resistance of the second cathode active material to suppress a side reaction therebetween, while also improving the conductivity of the cathode 100. Accordingly, the rapid charging performance and lifespan characteristics of the battery may be improved.

The term "linear conductive material" as used herein may refer to a conductive material having an aspect ratio of 2 to 20. The aspect ratio may refer to a length to a diameter of the linear conductive material.

For example, the second cathode active material layer 120, which is provided as the outermost active material layer of the cathode 100, may include the linear conductive material, such that the electrical conductivity and lifespan characteristics during rapid charging and discharging of the cathode 100 may be improved and the resistance may be reduced.

In some embodiments, the linear conductive material may include carbon nanotubes (CNTs). Accordingly, the electrical conductivity, crystallinity and stability of the cathode 100 may be improved.

For example, the linear conductive material may include at least one selected from the group consisting of single-walled carbon nanotubes (SWCNTs), double-walled carbon nanotubes (DWCNTs), multi-walled carbon nanotubes (MWCNTs), and rope carbon nanotubes (rope CNTs).

In some embodiments, the linear conductive material may have a length of 10 $\mu$m to 55 $\mu$m. Within the above range, a gap between particles and a volume of the cathode 100 may be appropriately maintained while also improving the electron mobility between the second cathode active materials.

In some embodiments, a content of the linear conductive material based on the total weight of the second cathode active material layer 120 may be 1 wt% to 5 wt%, or 1.5 wt% to 4 wt%. Within the above range, the energy density and lifespan characteristics of the cathode 100 may be improved.

According to an embodiment, the second cathode active material layer 120 may be disposed to be in direct contact with the first cathode active material layer 110.

A content of the second cathode active material based on a total weight of the second cathode active material layer 120 may be 40 wt% or more, 50 wt% or more, 60 wt% or more, 70 wt% or more, 80 wt% or more, or 90 wt% or more.

The content of the second cathode active material based on the total weight of the second cathode active material layer 120 may be 99 wt% or less, 95 wt% or less, 90 wt% or less, or 85 wt% or less.

In one embodiment, the cathode active material included in the second cathode active material layer 120 may be substantially composed of the second cathode active material.

For example, the first cathode active material layer 110 adjacent to the cathode current collector 105 may include the point-like conductive material, and the second cathode active material layer 120 provided as the outermost portion of the cathode 100 may include the linear conductive material, thereby improving the stability of the cathode, while also improving the lifespan characteristics and electrical conductivity during rapid charging and discharging.

The first cathode active material and the second cathode active material include the single particle form, such that an occurrence of cracks in the first and second cathode active materials may be suppressed, and the lifespan characteristics and impact resistance of the secondary battery may be improved.

The term "single particle form" as used herein is used to, for example, exclude secondary particles formed by aggregating a plurality of primary particles. For example, in the first cathode active material and the second cathode active material, a secondary particle structure in which a plurality (e.g., greater than 10, 20 or more, 30 or more, 40 or more, 50 or more, etc.) of primary particles are assembled or aggregated may be excluded.

The term "single particle form" as used herein does not exclude that, for example, a plurality (in a range of 2 to 10) of monolithic particles are attached or come into contact with each other to have a monolithic body form.

In some embodiments, the first cathode active material and the second cathode active material may include a structure in which a plurality of primary particles are merged together and substantially converted into single particles.

According to exemplary embodiments, the first cathode active material and the second cathode active material may include a lithium-nickel metal oxide. The lithium-nickel metal oxide may further include at least one of cobalt (Co), manganese (Mn) and aluminum (Al).

In some embodiments, the first cathode active material and the second cathode active material, or the lithium-nickel metal oxide may include a layered structure or a crystal structure represented by Formula 1 below.

[Formula 1] $\qquad$ $Li_xNi_aM_bO_{2+z}$

In Formula 1, x, a, b and z may be in a range $0.9 \leq x \leq 12$, $0.6 \leq a \leq 0.99$, $0.01 \leq b \leq 0.4$, $-0.5 \leq z \leq 0.1$, respectively. As described above, M may include Co, Mn and/or Al.

The chemical structure represented by Formula 1 indicates a bonding relationship included in the layered structure or the crystal structure of the first cathode active material and the second cathode active material, and does not exclude other additional elements. For example, M includes Co and/or Mn, and Co and/or Mn may be provided as main active elements of the first cathode active material and the second cathode active material together with Ni. Here, it should be understood that Formula 1 is provided to express the bonding relationship between the main active elements, and is a formula encompassing introduction and substitution of the additional elements.

In one embodiment, the cathode may further include auxiliary elements which are added to the main active elements, thus to enhance chemical stability of the first cathode active material and the second cathode active material, or the layered structure/crystal structure. The auxiliary element may be incorporated into the layered structure/crystal structure together to form a bond, and it should be understood that this case is also included within the chemical structure represented by Formula 1.

The auxiliary element may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr, for example. The auxiliary element may also act as an auxiliary active element which contributes to the capacity/output activity of the first cathode active material and the second cathode active material together with Co or Mn like Al, for example.

For example, the first cathode active material and the second cathode active material, or the lithium-nickel metal oxide may include a layered structure or a crystal structure represented by Formula 1-1 below.

[Formula 1-1] $\qquad$ $Li_xNi_aM1_{b1}M2_{b2}O_{2+z}$

In Formula 1-1, M1 may include Co, Mn and/or Al. M2 may include the above-described auxiliary elements. In Formula 1-1, x, a, b1, b2 and z may be in a range of $0.9 \leq x \leq 12$, $0.6 \leq a \leq 0.99$, $0.01 \leq b1+b2 \leq 0.4$, $-0.5 \leq z \leq 0.1$, respectively.

The first cathode active material and the second cathode active material may further include a coating element or a doping element in addition to the above-described boron. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal oxide particles to be included in the bonding structure represented by Formula 1 or Formula 1-1 above.

The first cathode active material and the second cathode active material may include a nickel-cobalt-manganese (NCM)-based lithium oxide. In this case, an NCM-based lithium oxide having an increased content of nickel may be used.

Ni may be provided as a transition metal related to the output and capacity of the lithium secondary battery.

Therefore, as described above, by employing a high-content (High-Ni) composition in the first cathode active material and the second cathode active material, a high-capacity cathode and a high-capacity lithium secondary battery may be provided.

However, as the content of Ni is increased, long-term storage stability and lifespan stability of the cathode or the secondary battery may be relatively decreased, and a side reaction with an electrolyte solution may also be increased. However, according to exemplary embodiments, the lifespan stability and capacity retention characteristics may be improved through Mn while maintaining electrical conductivity by including Co.

The content of Ni (e.g., a mole fraction of nickel based on the total moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the first cathode active material and the second cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the first cathode active material and the second cathode active material may include, for example, a lithium (Li) rich layered oxide (LLO)/over lithiated oxide (OLO)-based active material, a manganese (Mn)-rich active material, or a cobalt (Co)-less active material, which have a chemical structure or a crystal structure represented by Formula 2 below. These may be used alone or in combination of two or more thereof.

$$[Formula\ 2] \qquad p[Li_2MnO_3]\cdot(1-p)[Li_qJO_2]$$

In Formula 2, p and q are in a range of $0<p<1$, $0.9 \leq q \leq 12$, respectively, and J may include at least one element among Mn, Ni, Co, Fe, Cr, V, Cu, Zn, Ti, Al, Mg and B.

According to an embodiment, the first cathode active material and the second cathode active material may include substantially the same material.

In some embodiments, the first cathode active material and the second cathode active material may have a BET specific surface area of about 0.65 $m^2/g$ to 0.85 $m^2/g$, respectively. Within the above range, a side reaction with the electrolyte solution may be suppressed.

In some embodiments, the first cathode active material and the second cathode active material may have a tap density of about 1.5 $g/cm^3$ to 2.5 $g/cm^3$, respectively. Within the above range, the energy density and lifespan characteristics of the cathode 100 may be improved.

In exemplary embodiments, a first Raman peak intensity ratio defined by Equation 1 below may be smaller than a second Raman peak intensity ratio defined by Equation 2 below.

$$[Equation\ 1]$$

$$First\ Raman\ peak\ intensity\ ratio = ID1/IG1$$

$$[Equation\ 2]$$

$$Second\ Raman\ peak\ intensity\ ratio = ID2/IG2$$

In Equation 1, ID1 is a maximum peak intensity in a wavenumber range of 1300 $cm^{-1}$ to 1400 $cm^{-1}$ (e.g., D band of Raman spectrum) in a Raman spectrum of the first cathode active material layer 110. IG1 is a maximum peak intensity in a wavenumber range of 1550 $cm^{-1}$ to 1650 $cm^{-1}$ (e.g., G band of Raman spectrum) in a Raman spectrum of the first cathode active material layer 110.

In Equation 2, ID2 is a maximum peak intensity in a wavenumber range of 1300 $cm^{-1}$ to 1400 $cm^{-1}$ in a Raman spectrum of the second cathode active material layer 120, and IG2 is a maximum peak intensity in a wavenumber range of 1550 $cm^{-1}$ to 1650 $cm^{-1}$ in a Raman spectrum of the second cathode active material layer 120.

For example, the maximum peak intensity may indicate a maximum peak height in a specific wavenumber range.

For example, the first and second Raman peak intensity ratios may indicate a degree of amorphousness. For example, the higher the first and second Raman peak intensity ratios, the higher the amorphousness of the first and second cathode active material layers 110 and 120.

Since the first Raman peak intensity ratio of the first cathode active material layer 110 is smaller than the second Raman peak intensity ratio of the second cathode active material layer 120, while the strength and stability of the cathode 100 may be improved by the high amorphousness of the second cathode active material layer 120, the lifespan characteristics during rapid charging and discharging may be improved through the crystallinity of the first cathode active material layer 110.

In some embodiments, the first Raman peak intensity ratio may be 0.5 to 1.09, or 0.6 to 1.0. Within the above range, the lifespan characteristics during normal charging and discharging may be further improved.

The 'normal charging and discharging' may indicate common or slow charging and discharging rather than rapid charging and discharging.

In some embodiments, the second Raman peak intensity ratio may be 1.10 to 1.25, or 1.10 to 120. Within the above range, the lifespan characteristics during rapid charging and discharging may be further improved.

The above-described first Raman peak intensity ratio may be changed by comprehensively controlling the type of the conductive material included in the first cathode active material layer 110, the content of the conductive material in the total weight of the first cathode active material layer 110, and/or the average particle diameter (D50) of the first cathode active material.

The above-described second Raman peak intensity ratio may be changed by comprehensively controlling the type of the conductive material included in the second cathode active material layer 120, the content of the conductive material in the total weight of the second cathode active material layer 120, and/or the average particle diameter (D50) of the second cathode active material.

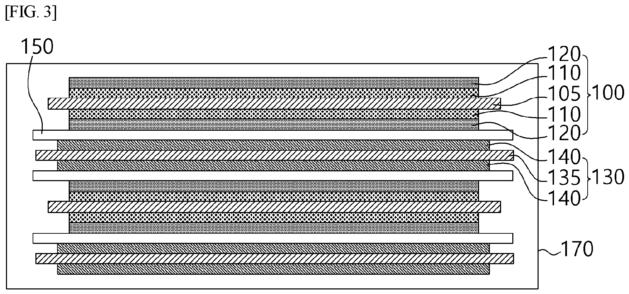

FIGS. 2 and 3 are a schematic plan view and a cross-sectional view illustrating a lithium secondary battery according to exemplary embodiments, respectively. For example, FIG. 3 is a cross-sectional view taken on line I-I' of FIG. 2 in a thickness direction of the lithium secondary battery.

Referring to FIGS. 2 and 3, the lithium secondary battery may include the above-described cathode 100 and an anode 130 disposed to face the cathode 100.

The first cathode active material layer 110 may be disposed on at least one surface of the cathode current collector 105, and the second cathode active material layer 120 may be disposed on the first cathode active material layer 110.

The above-described first cathode active material may be mixed in a solvent to prepare a first cathode slurry. The first cathode slurry may be coated/deposited to at least one surface of the cathode current collector 105, followed by drying and pressing the same to prepare the first cathode active material layer 110. The coating may include a method such as gravure coating, slot die coating, simultaneous multilayer die coating, imprinting, doctor blade coating, dip coating, bar coating or casting, etc.

The above-described second cathode active material may be mixed in a solvent to prepare a second cathode slurry. The second cathode slurry may be coated/deposited to the first cathode active material layer 110, followed by drying and pressing the same to prepare the second cathode active material layer 120. The coating may be performed using substantially the same type of method as the above-described coating method of the first cathode active material layer 110.

The first and second cathode active material layers 110 and 120 may further include a binder, and optionally further include a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), polyvinylidene fluoride-co-hexafluoropropylene, polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layers 110 and 120 may be decreased, and the amount of the cathode active material may be relatively increased. Accordingly, the output characteristics and capacity characteristics of the secondary battery may be improved.

The first and second cathode slurries may further include a thickener and/or a dispersant. In one embodiment, the first cathode slurry and/or the second cathode slurry may further include a thickener such as carboxymethyl cellulose (CMC).

The anode 130 may include an anode current collector 135, and an anode active material layer 140 formed on at least one surface of the anode current collector 135.

For example, the anode current collector 135 may include a copper foil, a nickel foil, a stainless steel foil, a titanium foil, a nickel foam, a copper foam, a polymer substrate coated with conductive metal and the like. These may be used alone or in combination of two or more thereof. For example, the anode current collector 135 may have a thickness of 10 $\mu$m to 50 $\mu$m.

The anode active material layer 140 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), mesophase pitch-based carbon fiber (MPCF) or the like.

The crystalline carbon may include graphite-based carbon such as natural graphite, artificial graphite, graphite cokes, graphite MCMB, graphite MPCF or the like.

The lithium metal may include pure lithium metal and/or lithium metal having a protective layer formed thereon for suppressing dendrite growth and the like. In one embodiment, a lithium metal-containing layer deposited or applied to the anode current collector 135 may be used as the anode active material layer 140. In one embodiment, a lithium thin film layer may also be used as the anode active material layer 140.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiO_x(0<x<2)$, metal-doped $SiO_x(0<x<2)$, a silicon-carbon composite, etc.

The metal may include lithium and/or magnesium, and the metal-doped $SiO_x(0<x<2)$ may include a metal silicate.

The anode active material may be mixed in a solvent to prepare an anode slurry. The anode slurry may be coated/deposited to the anode current collector 135, followed by drying and pressing the same to prepare the anode active material layer 140. The coating may include a method such as gravure coating, slot die coating, simultaneous multilayer die coating, imprinting, doctor blade coating, dip coating, bar coating or casting, etc. The anode active material layer 140 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when manufacturing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separator 150 may be interposed between the cathode 100 and the anode 130. The separator 150 may be configured to prevent an electrical short between the cathode 100 and the anode 130, and to allow a flow of ions to occur. For example, the separator 150 may have a thickness of 10 $\mu$m to 20 $\mu$m.

For example, the separator 150 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separator 150 may also include a ceramic-based material. For example, inorganic particles may be applied to the polymer film or dispersed within the polymer film to improve heat resistance.

The separator 150 may have a single-layer or multi-layer structure including the above-described polymer film and/or non-woven fabric.

According to exemplary embodiments, an electrode cell is defined by the cathode 100, the anode 130, and the separator 150, and a plurality of electrode cells are stacked to form, for example, a jelly roll type electrode assembly 160. For example, the electrode assembly 160 may be formed by winding, stacking, z-folding, stack-folding, etc. of the separator 150.

The electrode assembly 160 may be housed in a case 170 together with an electrolyte solution to define a lithium secondary battery. According to exemplary embodiments, a non-aqueous electrolyte may be used as the electrolyte solution.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF3)_2PF_4^-$, $(CF_3)3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc. The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 100 and the anode 130 instead of the above-described separator 150.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, Z is Ge, Zn or Ga), $Li_2S$-$GeS_2$, $Li_2S$-$SiS_2$-$Li_3PO_4$, $Li_2S$-$SiS_2$-$Li_pMO_q$ (p and q are positive numbers, M is P, Si, Ge, B, Al, Ga or In), $Li_7$-$xPS_6$-$xCl_x$ ($0 \leq x \leq 2$), $Li_7$-$xPS_6$-$xBr_x$ ($0 \leq x \leq 2$), $Li_y$-$xPS_6$-$xI_x$ ($0 \leq x \leq 2$), etc. These may be used alone or in combination of two or more thereof.

In one embodiment, the solid electrolyte may include an oxide-based amorphous solid electrolyte, such as, for example, $Li_2O$-$B_2O_3$-$P_2O_5$, $Li_2O$-$SiO_2$, $Li_2O$-$B_2O_3$, $Li_2O$-$B_2O_3$-ZnO, etc.

As shown in FIGS. 2 and 3, electrode tabs (a cathode tab and an anode tab) may protrude from the cathode current collector 105 and the anode current collector 135, respectively, which belong to each electrode cell, and may extend to one side of the case 170. The electrode tabs may be fused together with the one side of the case 170 to form electrode leads (a cathode lead 107 and an anode lead 137) extending or exposed to an outside of the case 170.

The lithium secondary battery may be manufactured, for example, in a cylindrical shape using a can, a square shape, a pouch type or a coin shape.

Hereinafter, experimental examples including specific examples and comparative examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

### Example 1

#### (1) Cathode Preparation

#### 1) Preparation of first cathode active material layer

$Ni_{0.88}Co_{0.09}Mn_{0.03}(OH)_2$ as an NCM precursor, and $Li_2CO_3$ and LiOH as lithium sources were ground and mixed for about 20 minutes. The mixed powder was calcined at 700 °C to 1000 °C for about 15 hours, and then subjected to grinding, sieving, and de-ironizing processes to prepare a first cathode active material having a composition of $LiNi_{0.88}Co_{0.09}Mn_{0.03}O_2$ and a single particle structure (average particle diameter (D50): 3.83 $\mu$m).

The first cathode active material, carbon black as the point-like conductive material, and PVDF as the binder were mixed in a mass ratio of 95:3:2 to prepare a first cathode slurry. The first cathode slurry was applied to an aluminum current collector, followed by drying and pressing the same to form a first cathode active material layer.

The carbon black had an average particle diameter (D50) of 30 nm, and a specific surface area of 254 $m^2$/g.

#### 2) Preparation of second cathode active material layer

$LiNi_{0.88}Co_{0.09}Mn_{0.03}O_2$ particles (average particle diameter (D50): 3.83 $\mu$m) having a single particle form prepared in the same manner as the first cathode active material were used as the second cathode active material.

The second cathode active material, carbon nanotubes (CNTs) as the linear conductive material, and PVDF as the binder were mixed in a mass ratio of 95:3:2 to prepare a second cathode slurry. The second cathode slurry was applied to the first cathode active material layer, followed by drying and pressing the same to form a second cathode active material layer. A cathode including the aluminum current collector, the first cathode active material layer and the second cathode active material layer was formed.

The CNT had a length of 10 $\mu$m to 55 $\mu$m, and a specific surface area of 173 m$^2$/g.

(2) Manufacturing of lithium secondary battery

An anode slurry, which includes 93 wt% of natural graphite as an anode active material, 5 wt% of flake type graphite (KS6) as a conductive material, 1 wt% of styrene-butadiene rubber (SBR) as a binder, and 1 wt% of carboxymethyl cellulose (CMC) as a thickener, was prepared. The anode slurry was applied to a copper substrate, followed by drying and pressing the same to prepare an anode.

Fourteen cathodes and fifteen anodes were respectively notched in a predetermined size and stacked, then an electrode cell was fabricated by interposing the separator (polyethylene, thickness 25 $\mu$m) between the cathode and anode. Thereafter, tap parts of the cathode and the anode were welded, respectively. A combination of the welded cathode/separator/anode was put into a pouch, followed by sealing three sides of the pouch except for one side into which an electrolyte is injected ("electrolyte injection side"). At this time, a portion having the electrode tab was included in the sealing part. After injecting the electrolytic through the electrolyte injection side, the remaining electrolyte injection side was also sealed, followed by impregnation for 12 hours or more to manufacture a lithium secondary battery.

The electrolyte used herein was prepared by adding 1 wt% of vinylene carbonate (VC) and 0.5 wt% of 1,3-propene sultone (PRS) based on the total weight of the solution to 1M LiPF$_6$ solution prepared using a mixed solvent of EC/EMC (25/75; volume ratio).

Pre-charging was performed on the lithium secondary battery at a current (5 A) corresponding to 0.25C for 36 minutes. After 1 hour, degassing was performed, and aging was conducted for 24 hours or more, then formation charging/discharging was performed (charging condition: CC-CV 0.2C 4.2 V 0.05C CUT-OFF, discharging condition: CC 0.2C 2.5 V CUT-OFF).

**Example 2**

A cathode and a lithium secondary battery were manufactured according to the same procedures as described in Example 1, except that the second cathode active material, carbon nanotubes (CNTs) as the linear conductive material, carbon black as the point-like conductive material, and PVDF as the binder were mixed in a mass ratio of 95:1.5:1.5:2, respectively, to prepare a second cathode slurry.

**Example 3**

A cathode and a lithium secondary battery were manufactured according to the same procedures as described in Example 1, except that the first cathode active material, carbon black as the point-like conductive material, and PVDF as the binder were mixed in a mass ratio of 97:1:2, respectively, to prepare a first cathode slurry.

**Example 4**

A cathode and a lithium secondary battery were manufactured according to the same procedures as described in Example 1, except that the first cathode active material, carbon black as the point-like conductive material, and PVDF as the binder were mixed in a mass ratio of 93:5:2, respectively, to prepare a first cathode slurry.

**Example 5**

A cathode and a lithium secondary battery were manufactured according to the same procedures as described in Example 1, except that the second cathode active material, carbon nanotubes (CNT) as the linear conductive material, and PVDF as the binder were mixed in a mass ratio of 97:1:2, respectively, to prepare a second cathode slurry.

**Example 6**

A cathode and a lithium secondary battery were manufactured according to the same procedures as described in Example 1, except that the second cathode active material, carbon nanotubes (CNT) as the linear conductive material, and PVDF as the binder were mixed in a mass ratio of 93:5:2, respectively, to prepare a second cathode slurry.

**Example 7**

A cathode and a lithium secondary battery were manufactured according to the same procedures as described in Example 1, except that the first cathode active material, carbon black as the point-like conductive material, and PVDF as the binder were mixed in a mass ratio of 97.1:0.9:2, respectively, to prepare a first cathode slurry.

**Example 8**

A cathode and a lithium secondary battery were manufactured according to the same procedures as described in Example 1, except that the first cathode active material, carbon black as the point-like conductive material, and PVDF as the binder were mixed in a mass ratio of 92.9:5.1:2, respectively, to prepare a first cathode slurry.

**Example 9**

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 97.1:0.9:2, respectively, to prepare a second cathode slurry.

**Example 10**

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 92.9:5.1:2, respectively, to prepare a second cathode slurry.

**Examples 11 and 12, and Comparative Examples 8 and 9**

Cathodes and lithium secondary batteries were manufactured according to the same procedures as described in Example 1, except that the average particle diameter (D50) of the first cathode active material and the second cathode active material during classification was adjusted, respectively, as shown in Table 1 below.

**Example 13**

A cathode and a lithium secondary battery were manufactured according to the same procedures as described in Example 1, except that the first cathode active material, carbon black as the point-like conductive material, and PVDF as the binder were mixed in a mass ratio of 93:5:2, respectively, to prepare a first cathode slurry, and the average particle diameter (D50) of the first cathode active material was adjusted to 3.98 $\mu$m.

**Example 14**

A cathode and a lithium secondary battery were manufactured according to the same procedures as described in Example 1, except that the first cathode active material, carbon black as the point-like conductive material, and PVDF as the binder were mixed in a mass ratio of 93:5:2, respectively, to prepare a first cathode slurry, and the average particle diameter (D50) of the first cathode active material was adjusted to 3.93 $\mu$m.

**Example 15**

A cathode and a lithium secondary battery were manufactured according to the same procedures as described in Example 1, except that the first cathode active material, carbon black as the point-like conductive material, and PVDF as the binder were mixed in a mass ratio of 97:1:2, respectively, to prepare a first cathode slurry, and the average particle diameter (D50) of the first cathode active material was adjusted to 3.02 $\mu$m.

**Example 16**

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 97:1:2 to prepare a second cathode slurry, and the average particle diameter (D50) of the second cathode active material was adjusted to 3.02 $\mu$m.

## Example 17

A cathode and a lithium secondary battery were manufactured according to the same procedures as described in Example 1, except that the second cathode active material, carbon nanotubes (CNTs) as the linear conductive material, and PVDF as the binder were mixed in a mass ratio of 93:5:2 to prepare a second cathode slurry, and the average particle diameter (D50) of the second cathode active material was adjusted to 3.98 $\mu$m.

## Comparative Example 1

A cathode and a lithium secondary battery were manufactured according to the same procedures as described in Example 1, except that the second cathode active material layer was not formed (a cathode active material layer of a single layer structure).

## Comparative Example 2

A cathode and a lithium secondary battery were manufactured according to the same procedures as described in Comparative Example 1, except that the same amount of CNT was used instead of the carbon black.

## Comparative Example 3

### Preparative Example

$NiSO_4$, $CoSO_4$ and $MnSO_4$ were input and mixed in a molar ratio of 0.88:0.09:0.03 in distilled water from which dissolved oxygen was removed by bubbling with $N_2$ for 24 hours to prepare a mixture. The mixed solution was introduced into a reactor at 55 °C, and NaOH as a precipitant and $NH_3 \cdot H_2O$ as a chelating agent were added thereto, followed by performing co-precipitation for 36 hours to obtain $Ni_{0.88}Co_{0.09}Mn_{0.03}(OH)_2$ as a transition metal precursor. The obtained precursor was dried at 80 °C for 12 hours, and then again dried at 110 °C for 12 hours.

Lithium hydroxide and the transition metal precursor were added to a dry high-speed mixer in a ratio of 1.05:1, and uniformly mixed for 5 minutes. The mixture was put into a calcination furnace in an oxygen atmosphere, and heated to 950 °C at a heating rate of 2 °C/min, then maintained at 950 °C for 12 hours. Oxygen was continuously passed at a flow rate of 10 mL/min during the heating and calcination. After completion of the calcination, the mixture was naturally cooled to room temperature, followed by pulverization and classification to obtain a cathode active material having a secondary particle form with a composition of $LiNi_{0.88}Co_{0.09}Mn_{0.03}O_2$ (with an average particle diameter (D50) of 10 $\mu$m).

A cathode and a lithium secondary battery were manufactured according to the same procedures as described in Example 1, except that the cathode active material of the preparative example was used as the first cathode active material.

## Comparative Example 4

A cathode and a lithium secondary battery were manufactured according to the same procedures as described in Example 1, except that the cathode active material of the preparative example of Comparative Example 3 was used as the second cathode active material.

## Comparative Example 5

A cathode and a lithium secondary battery were manufactured according to the same procedures as described in Example 1, except that the cathode active material of the preparative example of Comparative Example 3 was used as the first cathode active material and the second cathode active material.

## Comparative Example 6

A cathode and a lithium secondary battery were manufactured according to the same procedures as described in Example 1, except that the same amount of carbon black was used instead of the CNT in the preparation of the second cathode slurry.

## Comparative Example 7

A cathode and a lithium secondary battery were manufactured according to the same procedures as described in Example 1, except that the same amount of CNT was used instead of the carbon black in the preparation of the first cathode slurry.

## Experimental Example

### (1) Measurement of first Raman peak intensity ratio and second Raman peak intensity ratio

The cathodes manufactured according to the above-described examples and comparative examples were cut to fabricate samples.

The second Raman peak intensity ratio was measured for the second cathode active material layer, which is the outermost layer of the sample, using a 532 nm laser Raman analyzer (laser Raman spectroscopy) (Model name: Invia, Manufacturer: RENISHAW).

The specific measurement method of the Raman analyzer was as follows.

i) A power of the Raman analyzer was turned on.

ii) A spectral acquisition setup window was opened.

iii) 'Static' was selected as the Grating Scan Type, and 1000 (Raman Shift ($cm^{-1}$)) was entered as the Center value.

iv) In Configuration, 532 nm edge was selected as the Laser, 1800/mm (vis) as the Grating, and Renishaw 1024 StreamLine CCD as the Detector.

v) In the Acquisition condition setting, Exposure time (s) was set to 10, Objective to 50, Accumulation to 5, Laser power (%) to 10, and Scan to 20 times.

vi) After placing the sample on a sample stage and checking a measurement site, the Raman spectrum of the sample was acquired.

In the Raman spectrum above, a peak intensity (ID2) in a band having the wavenumber of 1300 $cm^{-1}$ to 1400 $cm^{-1}$ (e.g., D band) and a peak intensity (IG2) in a band having the wavenumber of 1550 $cm^{-1}$ to 1650 $cm^{-1}$ (e.g., G band) were measured. The measured peak intensities were applied to Equation 2 to calculate the second Raman peak intensity ratio.

The second cathode active material layer was partially removed by repeatedly attaching and detaching the 3M tape to an upper surface of the sample, and the Raman spectrum was obtained using the same equipment and method as the measurement of the second Raman peak intensity ratio for the first cathode active material layer attached to the 3M tape and then separated from the cathode.

In the Raman spectrum above, a peak intensity (ID1) in a band having the wavenumber of 1300 $cm^{-1}$ to 1400 $cm^{-1}$ (e.g., D band) and a peak intensity (IG1) in a band having the wavenumber of 1550 $cm^{-1}$ to 1650 $cm^{-1}$ (e.g., G band) were measured. The measured peak intensities were applied to Equation 1 to calculate the first Raman peak intensity ratio.

### (2) Measurement of energy density

Charging (CC-CV 0.33C 4.2 V 0.05C SOC 100% CUT-OFF) and discharging (CC 0.5C 2.5 V SOC 0% CUT-OFF) were repeated on the above-described lithium secondary batteries of the examples and comparative examples twice in a chamber at 25 °C. Then, energy densities (Wh/L) were measured by multiplying the discharge capacity at two times by an average discharge voltage and dividing it by the area.

### (3) Evaluation of capacity retention rate during rapid charging

The lithium secondary batteries manufactured according to the examples and comparative examples were charged at C-rates of 3.25C/3.0C/2.75C/2.5C/2.25C/2.0C/1.75C/1.5C/1.25C/1.0C/0.75C/0.5C according to the step-charging method to reach a depth of discharge (DOD) of 77.2% within 20 minutes, and then discharged at 1C. The charging and discharging process was set to be one cycle, and the rapid charging evaluation was performed by repeating the cycle. 300 cycles were performed while having a rest time of 10 minutes between charge and discharge cycles, then the discharge capacity after 200 cycles was divided by the discharge capacity after 1 cycle and multiplied by 100 to evaluate the capacity retention rates during rapid charging.

### (4) Evaluation of normal capacity retention rate

Charging (CC-CV 0.5C 4.3V 0.05C CUT-OFF) and discharging (CC 1.0C 2.5 V CUT-OFF) were repeated on the above-described lithium secondary batteries of the examples and comparative examples 200 times in a chamber at 25 °C. Then the discharge capacity at 200 times was divided by the discharge capacity at one time and multiplied by 100 to evaluate the normal capacity retention rates.

Measurement and evaluation results are shown in Tables 1 and 2 below.

The content of the conductive material included in the first cathode active material layer based on the total weight of the first cathode active material layer, the content of the conductive material included in the second cathode active material layer based on the total weight of the second cathode active material layer, the average particle diameter (D50) of the first cathode active material, and the average particle diameter (D50) of the second cathode active material are shown in Table 1 below.

In Table 1, "Point-like" indicates the point-like conductive material (carbon black), and "Linear" indicates the linear conductive material (CNT).

[TABLE 1]

| | Conductive material content (wt%) | | Average particle diameter (D50) (μm) | | First Raman peak intensity ratio | Second Raman peak intensity ratio |
|---|---|---|---|---|---|---|
| | First cathode active material layer | Second cathode active material layer | First cathode active material | Second cathode active material | | |
| Example 1 | 3 (Point-like) | 3 (Linear) | 3.83 | 3.83 | 0.95 | 1.17 |
| Example 2 | 3 (Point-like) | 1.5/1.5 (Linear/-Po int-like) | 3.83 | 3.83 | 0.96 | 1.13 |
| Example 3 | 1 (Point-like) | 3 (Linear) | 3.83 | 3.83 | 0.61 | 1.15 |
| Example 4 | 5 (Point-like) | 3 (Linear) | 3.83 | 3.83 | 1.07 | 1.16 |
| Example 5 | 3 (Point-like) | 1 (Linear) | 3.83 | 3.83 | 0.91 | 1.11 |
| Example 6 | 3 (Point-like) | 5 (Linear) | 3.83 | 3.83 | 0.95 | 1.24 |
| Example 7 | 0.9 (Point-like) | 3 (Linear) | 3.83 | 3.83 | 0.50 | 1.16 |
| Example 8 | 5.1 (Point-like) | 3 (Linear) | 3.83 | 3.83 | 1.09 | 1.14 |
| Example 9 | 3 (Point-like) | 0.9 (Linear) | 3.83 | 3.83 | 0.99 | 1.10 |
| Example 10 | 3 (Point-like) | 5.1 (Linear) | 3.83 | 3.83 | 0.97 | 1.25 |
| Example 11 | 3 (Point-like) | 3 (Linear) | 2.98 | 3.83 | 0.91 | 1.19 |
| Example 12 | 3 (Point-like) | 3 (Linear) | 4.02 | 3.83 | 0.93 | 120 |
| Example 13 | 5 (Point-like) | 3 (Linear) | 3.98 | 3.83 | 1.11 | 1.08 |
| Example 14 | 5 (Point-like) | 3 (Linear) | 3.93 | 3.83 | 1.10 | 1.16 |
| Example 15 | 1 (Point-like) | 3 (Linear) | 3.02 | 3.83 | 0.49 | 1.18 |
| Example 16 | 3 (Point-like) | 1 (Linear) | 3.83 | 3.02 | 0.96 | 1.09 |
| Example 17 | 3 (Point-like) | 5 (Linear) | 3.83 | 3.98 | 0.99 | 1.26 |
| Comparative example 1 | 3 (Point-like) | - | 3.83 | - | 0.95 | - |
| Comparative example 2 | 3 (Linear) | - | 3.83 | - | 1.22 | - |
| Comparative example 3 | 3 (Point-like) | 3 (Linear) | 10 (Secondary particles) | 3.83 | 0.82 | 1.19 |
| Comparative example 4 | 3 (Point-like) | 3 (Linear) | 3.83 | 10 (Secondary particles) | 0.94 | 1.11 |
| Comparative example 5 | 3 (Point-like) | 3 (Linear) | 10 (Secondary particles) | 10 (Secondary particles) | 0.84 | 1.12 |
| Comparative example 6 | 3 (Point-like) | 3 (Point-like) | 3.83 | 3.83 | 0.93 | 0.94 |
| Comparative example 7 | 3 (Linear) | 3 (Linear) | 3.83 | 3.83 | 1.21 | 1.23 |

(continued)

| | Conductive material content (wt%) | | Average particle diameter (D50) (μm) | | First Raman peak intensity ratio | Second Raman peak intensity ratio |
|---|---|---|---|---|---|---|
| | First cathode active material layer | Second cathode active material layer | First cathode active material | Second cathode active material | | |
| Comparative example 8 | 3 (Point-like) | 3 (Linear) | 3.83 | 2.96 | 0.94 | 1.16 |
| Comparative example 9 | 3 (Point-like) | 3 (Linear) | 3.83 | 4.05 | 0.95 | 1.17 |

[TABLE 2]

| | Energy density (Wh/L) | Capacity retention rate during rapid charging (%, 200 cycles) | General capacity retention rate (%, 200 cycles) |
|---|---|---|---|
| Example 1 | 700 | 97.0 | 94.2 |
| Example 2 | 700 | 95.4 | 94.2 |
| Example 3 | 815 | 95.7 | 94.1 |
| Example 4 | 650 | 96.0 | 93.9 |
| Example 5 | 820 | 95.5 | 93.7 |
| Example 6 | 665 | 96.1 | 93.5 |
| Example 7 | 850 | 92.3 | 90.8 |
| Example 8 | 625 | 92.5 | 91.1 |
| Example 9 | 845 | 92.0 | 90.8 |
| Example 10 | 640 | 91.9 | 91.5 |
| Example 11 | 700 | 90.8 | 91.5 |
| Example 12 | 700 | 92.3 | 90.9 |
| Example 13 | 700 | 89.5 | 88.7 |
| Example 14 | 700 | 89.1 | 88.5 |
| Example 15 | 700 | 90.0 | 88.6 |
| Example 16 | 700 | 89.6 | 89.1 |
| Example 17 | 700 | 90.3 | 88.8 |
| Comparative example 1 | 700 | 69.1 | 80.5 |
| Comparative example 2 | 700 | 72.5 | 81.1 |
| Comparative example 3 | 700 | 78.1 | 70.5 |
| Comparative example 4 | 700 | 77.5 | 71.6 |
| Comparative example 5 | 700 | 79.6 | 67.3 |
| Comparative example 6 | 700 | 83.2 | 85.1 |
| Comparative example 7 | 700 | 84.6 | 86.0 |
| Comparative example 8 | 700 | 85.5 | 85.2 |
| Comparative example 9 | 700 | 86.1 | 84.0 |

Referring to Tables 1 and 2, in the examples which include the first cathode active material layer including the first cathode active material in the single particle form and the point-like conductive material and the second cathode active material layer including the second cathode active material in the single particle form (average particle diameter (D50): 3

μm to 4 μm) and the linear conductive material, the capacity retention rate during rapid charging and the normal capacity retention rate were improved compared to the comparative examples.

In examples 7 and 9 where the content of the conductive material was less than 1 wt% based on the total weight of the cathode active material layer, the capacity retention rate during rapid charging and the normal capacity retention rate were relatively decreased compared to the other examples.

In examples 8 and 10 where the content of the conductive material was greater than 5 wt% based on the total weight of the cathode active material layer, the energy density was relatively decreased compared to the other examples.

In Examples 11 and 12 where the average particle diameter (D50) of the first cathode active material deviated from 3 μm to 4 μm, the capacity retention rate during rapid charging and the normal capacity retention rate were relatively decreased compared to the other examples.

In Examples 13 to 15 where the first Raman peak intensity ratio deviated from 0.5 to 1.09, the capacity retention rate during rapid charging and the normal capacity retention rate were relatively decreased compared to the other examples.

In Examples 16 and 17 where the second Raman peak intensity ratio deviated from 1.10 to 1.25, the capacity retention rate during rapid charging and the normal capacity retention rate were relatively decreased compared to the other examples.

**Claims**

1. A cathode 100 for a lithium secondary battery comprising:

   a cathode current collector 105;
   a first cathode active material layer 110 which is disposed on at least one surface of the cathode current collector 105, and comprises a first cathode active material having a single particle form and a point-like conductive material; and
   a second cathode active material layer 120 which is disposed on the first cathode active material layer 110, and comprises a second cathode active material having a single particle form and a linear conductive material, wherein the second cathode active material has an average particle diameter (D50) of 3 μm to 4 μm.

2. The cathode 100 for a lithium secondary battery according to claim 1, wherein the point-like conductive material comprises at least one selected from the group consisting of graphite, carbon black, graphene, tin, tin oxide, titanium oxide, $LaSrCoO_3$ and $LaSrMnO_3$.

3. The cathode 100 for a lithium secondary battery according to claim 1 or 2, wherein the linear conductive material comprises carbon nanotubes.

4. The cathode 100 for a lithium secondary battery according to one of claims 1 to 3, wherein the linear conductive material has a length of 10 μm to 55 μm.

5. The cathode 100 for a lithium secondary battery according to one of claims 1 to 4, wherein a first Raman peak intensity ratio defined be Equation 1 below is smaller than a second Raman peak intensity ratio defined be Equation 2 below:

$$[Equation\ 1]$$

$$First\ Raman\ peak\ intensity\ ratio = ID1/IG1$$

$$[Equation\ 2]$$

$$Second\ Raman\ peak\ intensity\ ratio = ID2/IG2$$

where in, in Equations 1 and 2, ID1 is a maximum peak intensity in a wavenumber range of 1300 cm$^{-1}$ to 1400 cm$^{-1}$ in a Raman spectrum of the first cathode active material layer 110, IG1 is a maximum peak intensity in a wavenumber range of 1550 cm$^{-1}$ to 1650 cm$^{-1}$ in a Raman spectrum of the first cathode active material layer 110, ID2 is a maximum peak intensity in a wavenumber range of 1300 cm$^{-1}$ to 1400 cm$^{-1}$ in a Raman spectrum of the second cathode active material layer 120, and IG2 is a maximum peak intensity in a wavenumber range of 1550 cm$^{-1}$ to 1650 cm$^{-1}$ in a Raman

spectrum of the second cathode active material layer 120.

6. The cathode 100 for a secondary battery according to claim 5, wherein the first Raman peak intensity ratio is 0.5 to 1.09.

7. The cathode 100 for a secondary battery according to claim 5 or 6, wherein the second Raman peak intensity ratio is 1.10 to 1.25.

8. The cathode 100 for a lithium secondary battery according to one of claims 1 to 7, wherein the first cathode active material has an average particle diameter (D50) of 3 $\mu$m to 4 $\mu$m.

9. The cathode 100 for a lithium secondary battery according to one of claims 1 to 8, wherein a content of the point-like conductive material is 1% by weight to 5% by weight based on a total weight of the first cathode active material layer 110.

10. The cathode 100 for a lithium secondary battery according to one of claims 1 to 9, wherein a content of the linear conductive material is 1% by weight to 5% by weight based on a total weight of the second cathode active material layer 120.

11. A lithium secondary battery comprising:

the cathode 100 for a lithium secondary battery according to one of claims 1 to 10; and
an anode 130 disposed to face the cathode 100.

[FIG. 1]

<u>100</u>

120

110

105

[FIG. 2]

107

137

I

160

170

I'

[FIG. 3]

Europäisches
Patentamt

European
Patent Office

Office européen
des brevets

# EUROPEAN SEARCH REPORT

**Application Number**

EP 24 22 3569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 916 847 A1 (LG ENERGY SOLUTION LTD [KR]) 1 December 2021 (2021-12-01) * paragraphs [0075] - [0077], [0082], [0083]; claims 1-12 * | 1-8,11 | INV. H01M4/131 H01M4/505 H01M4/525 H01M4/62 H01M10/0525 |
| Y | US 2023/121815 A1 (KIM SUE JIN [KR] ET AL) 20 April 2023 (2023-04-20) * paragraphs [0007], [0008]; claims 1-26 * | 1-8,11 | |
| A | US 2023/104184 A1 (KIM DONG HWI [KR] ET AL) 6 April 2023 (2023-04-06) * paragraphs [0036], [0080], [0086] - [0089]; claims 1-14 * | 1-11 | |

TECHNICAL FIELDS
SEARCHED      (IPC)

H01M

The present search report has been drawn up for all claims

| Place of search | Date of completion of the search | Examiner |
|---|---|---|
| Munich | 5 June 2025 | Szekely, Noemi Kinga |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 24 22 3569

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2025

| Patent document cited in search report | | Publication date | Patent family member(s) | | Publication date |
|---|---|---|---|---|---|
| EP 3916847 | A1 | 01-12-2021 | CN | 113711384 A | 26-11-2021 |
| | | | EP | 3916847 A1 | 01-12-2021 |
| | | | JP | 7263531 B2 | 24-04-2023 |
| | | | JP | 2022521328 A | 06-04-2022 |
| | | | KR | 20210067735 A | 08-06-2021 |
| | | | US | 2022149350 A1 | 12-05-2022 |
| | | | WO | 2021107586 A1 | 03-06-2021 |
| US 2023121815 | A1 | 20-04-2023 | CA | 3234432 A1 | 20-04-2023 |
| | | | EP | 4418401 A1 | 21-08-2024 |
| | | | JP | 2024537149 A | 10-10-2024 |
| | | | US | 2023121815 A1 | 20-04-2023 |
| | | | WO | 2023063787 A1 | 20-04-2023 |
| US 2023104184 | A1 | 06-04-2023 | CN | 114788042 A | 22-07-2022 |
| | | | EP | 4060760 A1 | 21-09-2022 |
| | | | JP | 7536381 B2 | 20-08-2024 |
| | | | JP | 2023506034 A | 14-02-2023 |
| | | | KR | 20210080249 A | 30-06-2021 |
| | | | US | 2023104184 A1 | 06-04-2023 |
| | | | WO | 2021125873 A1 | 24-06-2021 |

EPO FORM P0459

For more details about this annex : see Official Journal of the European Patent Office, No. 12/82